# FASCICULE DE BREVET EUROPEEN

(11) **EP 1 949 302 B1**
(45) Date de publication et mention de la délivrance du brevet: **13.04.2016**
(21) Numéro de dépôt: 06831031.7
(22) Date de dépôt: 24.10.2006
(51) Int. Cl.: G06K 9/00, G06K 9/20

(54) **DISPOSITIF ET PROCEDE D'INTERACTION AVEC UN UTILISATEUR**
EINRICHTUNG UND VERFAHREN ZUR INTERAKTION MIT EINEM BENUTZER
DEVICE AND METHOD FOR INTERACTION WITH A USER

(30) Priorité: 24.10.2005 FR 0510900
(43) Date de publication de la demande: 30.07.2008
(73) Titulaire: ITESOFT S.A., 30470 Aimargues (FR)
(72) Inventeur: CHARPENTIER, Didier, F-30220 Aigues Mortes (FR)
(74) Mandataire: Cornuejols, Georges
(86) Numéro de dépôt international: PCT/FR2006/002418
(87) Numéro de publication internationale: WO 2007/060303

(56) Documents cités:
- EP-A2- 0 435 478
- GB-A- 2 239 725
- US-A1- 2003 099 379
- US-A1- 2003 128 866
- US-A1- 2003 154 085
- US-A1- 2004 205 534

## Description

La présente invention concerne un dispositif et un procédé d'interaction avec un utilisateur. Elle s'applique, en particulier à des bornes interactives capables de traiter plusieurs types de procédures basées sur un ou plusieurs documents fournis par l'utilisateur. Cette borne vise, d'une part, à faire gagner du temps à l'utilisateur, d'autre part, à lui permettre de vérifier rapidement et automatiquement qu'il dispose de toutes les informations et documents nécessaires pour réaliser une procédure. Cette borne vise aussi à faire gagner du temps à l'organisation chargée de la mise en oeuvre de la procédure, par exemple, en pré-traitant les informations et documents nécessaires à la bonne exécution de ces procédures, en estimant les risques de falsification d'identité de l'utilisateur ou des informations ou documents qu'il fournit et/ou en collectant d'autres informations disponibles en base de données pour compléter ou vérifier les informations et documents fournis par l'utilisateur.

Il s'agit donc de rendre plus rapide et plus agréables les relations entre les organisations qui ont un grand nombre d'utilisateurs, par exemple, clients, usagers, administrés ou visiteurs et ces utilisateurs.

On connaît des bornes munies de caméras vidéos, d'un scanner et d'une imprimante, pour échanger des documents et communiquer à distance. Si elles permettent un dialogue entre l'utilisateur et un interlocuteur lointain dit « télé-conseiller » et la discussion du contenu de documents, elles n'effectuent aucun traitement automatique et n'augmentent donc pas la productivité de l'organisation.

D'autres bornes interactives sont en fait des ordinateurs fournissant de l'aide, en plusieurs langues, pour préparer une formalité. Elles ne permettent pas de traiter des documents. L'usager est ensuite amener à rencontrer physiquement un préposé pour lui transmettre les documents nécessaires à la procédure visée. Le gain de productivité est donc, là encore, réduit.

On connaît des systèmes de traitement de chèques dotés de moyen de reconnaissance optique de caractères, d'identification biométrique et d'une machine d'analyse de risque qui établit une identification de l'utilisateur et autorise, en fonction de la confiance dans ladite identification, le paiement d'un chèque.

On connaît aussi des systèmes utilisés par les services d'immigration qui vérifient, à partir d'un passeport, l'empreinte digitale du voyageur avant d'autoriser l'accès au territoire concerné.

Ces deux derniers systèmes traitent donc des informations de bas niveau et ne fournissent que des résultats binaires, c'est-à-dire autorisation ou refus et, éventuellement, montant d'un paiement.

Hormis les confirmations, aucune information n'est demandée à l'utilisateur qui attend passivement le résultat des traitements. Ces systèmes ne peuvent traiter, chacun qu'un seul type de document et ne permettent donc pas de préparer une interaction avec un préposé.

Or les organisations, par exemple fiscales, administratives, sociales et/ou d'assurances mettent en oeuvre un grand nombre de procédures impliquant, elles-mêmes, un grand nombre de formulaires et de justificatifs papiers ou électroniques.

Il y a donc un besoin pour des bornes interactives multi-procédures, c'est-à-dire capables de traiter une pluralité de procédures basées sur différents types de documents.

La présente invention vise à remédier à ces inconvénients.

A cet effet, la présente invention vise, selon un premier aspect, un dispositif de traitement d'une pluralité de procédures basées sur une pluralité de types de documents, qui comporte :
un moyen de sélection d'une procédure parmi ladite pluralité de procédure,
   - un moyen d'identification, dans une base de données, d'informations complémentaires nécessaires pour la réalisation de ladite procédure et
   - un moyen de demande d'information complémentaire à l'utilisateur adapté à demander, à l'utilisateur, au moins une information complémentaire identifiée par le moyen d'identification d'informations.

Grâce à ces dispositions, plusieurs procédures peuvent être gérées par le même dispositif et les informations nécessaires à ces procédures sont successivement collectées auprès de l'utilisateur. L'utilisateur peut, ainsi, fournir successivement les informations nécessaires à une procédure, administrative ou autre, et vérifier qu'il remplit les conditions pour mener à bien ladite procédure.

Le but est de rendre la relation entre l'utilisateur et les guichetiers de l'organisation plus simple, plus rapide et plus sûre. Le dispositif permet de réduire le temps passé à attendre, le temps passé au guichet et le temps de traitement de documents hors guichet. Elle permet aussi au préposé de se concentrer sur les cas où il y a un doute concernant l'identité de l'utilisateur ou l'authenticité,de ses documents.

Selon des caractéristiques particulières, le moyen de sélection comporte :
- un moyen de capture d'images de documents,
- un moyen de traitement d'images captées par le moyen de capture d'images, adapté à reconnaître un type de document dans ladite pluralité de types de documents et
- un moyen d'identification de procédure adapté à identifier une procédure à laquelle correspond ledit type de document,
le moyen d'identification étant adapté à identifier, dans une base de données, des informations complémentaires nécessaires, conjointement audit document, pour la réalisation de ladite procédure.

Grâce à ces dispositions, la ou les procédures liées à un type de document, est(sont) automatiquement reconnues et les informations qui les concernent sont automatiquement identifiées.

Selon des caractéristiques particulières, le moyen d'identification d'informations est adapté à identifier des documents complémentaires, le moyen de demande d'information complémentaire étant adapté, d'une part, à demander au moins un document complémentaire et, d'autre part, à commander un moyen de capture d'images pour le faire capter une image de chaque document complémentaire demandé, le moyen de traitement d'image étant adapté à vérifier le type de chaque document complémentaire dont une image est captée.

Grâce à ces dispositions, lorsque plusieurs documents sont nécessaires pour la réalisation de la procédure, le dispositif les demande à l'utilisateur.

Selon des caractéristiques particulières, le moyen de traitement d'images est adapté à extraire des informations d'au moins une image de document captée par le moyen de capture d'images, le dispositif comportant, en outre, un moyen de comparaison d'informations de même type extraites d'images de différents documents afin de vérifier leur correspondance, le moyen de demande d'informations complémentaires étant adapté à signaler une absence de correspondance entre les informations de même type extraites d'images de différents documents.

Grâce à ces dispositions, l'utilisateur et/ou l'organisation peuvent être informés des évolutions de situation ou des incohérences de déclaration, afin de les corriger ou d'effectuer des vérifications complémentaires.

Selon des caractéristiques particulières, le moyen de demande d'information complémentaire est adapté, d'une part, à demander la saisie, par l'utilisateur, d'au moins une information complémentaire et, d'autre part, à commander un moyen de saisie, manuelle ou vocale, par l'utilisateur, d'informations complémentaires.

Selon des caractéristiques particulières, le moyen de demande d'information complémentaire est adapté, d'une part, à demander au moins la présentation d'un support d'information électronique portable et, d'autre part, à commander un moyen de communication avec ledit support d'information électronique portable.

Selon des caractéristiques particulières, le dispositif tel que succinctement exposé ci-dessus comporte, en outre, un moyen de recherche d'informations complémentaires, dans une base de données, adapté à rechercher, dans une base de données, au moins une information complémentaire identifiée par le moyen d'identification d'informations complémentaires.

Grâce à chacune de ces dispositions, l'information complémentaire nécessaire peut être complexe, vérifiée et/ou mise à jour.

Selon des caractéristiques particulières, le dispositif tel que succinctement exposé ci-dessus comporte un moyen de comparaison d'au moins une information complémentaire fournie par un utilisateur en réponse à la demande d'informations complémentaires effectuée par le moyen de demande d'informations complémentaires et d'au moins une information complémentaire de même type fournie par le moyen de recherche d'informations complémentaires, le moyen de demande d'information étant adapté à signaler une absence de correspondance entre au moins une information complémentaire fournie par un utilisateur et une information complémentaire de même type fournie par le moyen de recherche d'informations complémentaires.

Grâce à ces dispositions, l'information complémentaire peut être vérifiée et/ou mise à jour.

Selon des caractéristiques particulières, le moyen de traitement d'images est adapté à vérifier que chaque document dont une image est captée par le moyen de capture d'images comporte toute l'information requise pour ladite procédure et, en cas de manque d'information requise, à transmettre au moyen de demande d'information, chacune des informations manquantes sur ledit document.

Grâce à ces dispositions, le dispositif peut aider l'utilisateur à renseigner le document ou formulaire et, notamment, lui donner accès à des aides en ligne et/ou à un télé-conseiller réel ou virtuel.

Selon des caractéristiques particulières, le dispositif tel que succinctement exposé ci-dessus comporte un capteur d'une image d'une partie du corps de l'utilisateur et un moyen d'analyse biométrique adapté à comparer ladite image et une image d'une photographie de l'utilisateur présente sur un document dont une image est captée par le moyen de capture d'image.

Selon des caractéristiques particulières, le dispositif tel que succinctement exposé ci-dessus comporte un capteur d'une image d'une partie du corps de l'utilisateur et un moyen d'analyse biométrique adapté à comparer ladite image et des données biométriques de l'utilisateur conservées dans une base de données distante ou dans un support mémoire local.

Selon des caractéristiques particulières, le dispositif tel que succinctement exposé ci-dessus comporte un moyen de capture d'écriture ou de signature de l'utilisateur faite à la surface dudit moyen de capture d'écriture ou de signature, et un moyen d'analyse d'écriture ou de signature adapté à comparer ladite écriture ou signature avec une image d'une écriture ou d'une signature de l'utilisateur présente sur un document dont une image est captée par le moyen de capture d'image.

Selon des caractéristiques particulières, le dispositif tel que succinctement exposé ci-dessus comporte un moyen de capture d'écriture ou de signature de l'utilisateur faite à la surface dudit moyen de capture d'écriture ou de signature, et un moyen d'analyse du mouvement d'écriture ou de signature adapté à comparer ledit mouvement avec une information de mouvement d'écriture ou de signature de l'utilisateur conservée dans une base de données distante ou dans un support d'information électronique portable.

Selon des caractéristiques particulières, le dispositif tel que succinctement exposé ci-dessus comporte un capteur de voix de l'utilisateur et un moyen d'analyse d'empreinte vocale adapté à comparer l'empreinte vocale de l'utilisateur et des données d'empreinte vocale de l'utilisateur conservées dans une base de données distante ou dans un support mémoire local.

Grâce à chacune de ces dispositions, un risque concernant l'identité de l'utilisateur peut être estimé.

Selon des caractéristiques particulières, le dispositif tel que succinctement exposé ci-dessus comporte un moyen de transmission à distance d'images de documents à un terminal tiers et un moyen d'orientation de l'utilisateur vers ledit terminal tiers.

Grâce à ces dispositions, le guichetier chargé du traitement de la procédure peut recevoir des informations complètes pour traiter la procédure et recevoir efficacement l'utilisateur.

Selon des caractéristiques particulières, le dispositif tel que succinctement exposé ci-dessus comporte un moyen d'évaluation de risque relatif à l'authenticité d'un document et un moyen d'alarme adapté à transmettre une alarme à distance en cas d'évaluation de risque supérieure à une valeur prédéterminée.

Selon des caractéristiques particulières, le dispositif tel que succinctement exposé ci-dessus comporte un moyen d'évaluation de risque relatif à l'identification de l'utilisateur et un moyen d'alarme adapté à transmettre une alarme à distance en cas d'évaluation de risque supérieure à une valeur prédéterminée.

Selon des caractéristiques particulières, le dispositif tel que succinctement exposé ci-dessus comporte un moyen d'analyse du comportement physique de l'utilisateur.

Grâce à chacune de ces dispositions, seules les procédures pour lesquelles un risque suffisant a été détecté font l'objet d'un traitement particulier visant à réduite et/ou à éliminer ce risque.

Selon des caractéristiques particulières, le dispositif tel que succinctement exposé ci-dessus comporte un moyen de communication avec un télé-conseiller et un moyen de transmission, audit télé-conseiller, de l'information fournie par l'utilisateur.

Grâce à ces dispositions, le télé-conseiller peut prendre connaissance de l'ensemble des pièces et informations fournies par l'utilisateur et l'aider, ainsi, plus efficacement.

Selon des caractéristiques particulières, le dispositif tel que succinctement exposé ci-dessus comporte un moyen de génération d'un assistant virtuel, un moyen d'affichage d'une image de synthèse dudit assistant virtuel et un moyen de diffusion d'une voix synthétique dudit assistant virtuel.

Grâce à ces dispositions, l'utilisateur peut retrouver un environnement plus humain pour progresser dans la fourniture de documents ou informations complémentaires.

Selon des caractéristiques particulières, le moyen de traitement d'images est adapté à vérifier que le document comporte toute l'information requise pour une procédure et, en cas de manque d'information requise, à transmettre au moyen de demande d'information, chacune des informations manquantes sur ledit document.

Grâce à ces dispositions, si un utilisateur n'a pas correctement complété et/ou signé un formulaire, le dispositif lui indique les informations manquantes, ce qui permet de faire gagner du temps à l'utilisateur et à l'éventuel préposé qui aura à examiner le document en question.

Selon des caractéristiques particulières, le dispositif tel que succinctement exposé ci-dessus comporte un moyen de vérification que l'utilisateur dispose de toute l'information requise pour une procédure et, en cas de manque d'information requise, à transmettre à une base de données distante, une requête relative à au moins une information manquante.

Grâce à-ces dispositions, si une information ou un document manque, par exemple une preuve de domiciliation, le dispositif recherche si une telle preuve n'a pas déjà été enregistrée dans une base de données, ce qui permet de faire gagner du temps à l'utilisateur.

Selon un deuxième aspect, la présente invention vise un procédé de traitement d'une pluralité de procédures basées sur une pluralité de types de documents, caractérisé en ce qu'il comporte:
- une étape de sélection d'une procédure parmi ladite pluralité de procédure,
- une étape d'identification, dans une base de données, d'informations complémentaires nécessaires pour la réalisation de ladite procédure et
- une étape de demande d'information complémentaire à l'utilisateur adapté à demander, à l'utilisateur, au moins une information complémentaire identifiée par le moyen d'identification d'informations.

Selon des caractéristiques particulières, l'étape de sélection comporte :
- une étape de capture d'images de documents, .
- une étape de traitement d'images captées par le moyen de capture d'images, adapté à reconnaître un type de document dans ladite pluralité de types de documents et
- une étape d'identification de procédure adapté à identifier une procédure à laquelle correspond ledit type de document,
l'étape d'identification identifiant, dans une base de données, des informations complémentaires nécessaires, conjointement audit document, pour la réalisation de ladite procédure.

Selon des caractéristiques particulières :
- au cours de l'étape d'identification d'informations, on identifie des documents complémentaires audit document,
- au cours de l'étape de demande d'information complémentaire, d'une part, on demande au moins un document complémentaire et, d'autre part, on déclenche une étape de capture d'images pour capter une image de chaque document complémentaire demandé, et
au cours de l'étape de traitement d'image, on vérifie le type de chaque document complémentaire dont une image est captée.

Les avantages, buts et caractéristiques particulières de ce procédé étant similaires à ceux de la borne interactive tell que succinctement exposée ci-dessus, ils ne sont pas rappelés ici.

Selon un troisième aspect, la présente invention vise à pré-traiter des demandes d'utilisateur avant leur passage en guichet ou pour remplacer ce passage en guichet, après identification de l'utilisateur.

A cet effet, la présente invention vise, selon ce troisième aspect, un dispositif d'interaction entre un utilisateur et une organisation, caractérisé en ce qu'il comporte :
- un moyen d'identification de l'utilisateur et
- un moyen de mise en communication sonore de l'utilisateur avec un représentant de l'organisation.

Grâce à ces dispositions, le représentant de l'organisation, ou télé-conseiller, peut vérifier que l'utilisateur est bien celui qu'il prétend être, accéder à des informations confidentielles de l'utilisateur, par exemple son dossier au sein de l'organisation concernée et partager de ces informations confidentielles avec l'utilisateur. L'utilisateur et le télé-conseiller peuvent ainsi effectuer les interactions nécessaires à la mise en place d'une procédure ou d'une transaction.

L'utilisateur peut fournir successivement les informations nécessaires à une procédure, administrative, transactionnelle ou autre, et vérifier qu'il remplit les conditions pour mener à bien ladite procédure.

Le but est de rendre la relation entre l'utilisateur et l'organisation plus simple, plus rapide et plus sûre. Le dispositif permet de réduire le temps passé à attendre, le temps passé à interagir avec le télé-conseiller et le temps de traitement de procédure hors guichet.

Selon des caractéristiques particulières, le moyen d'identification de l'utilisateur comporte un capteur d'une image d'une partie du corps de l'utilisateur et un moyen d'analyse biométrique adapté à comparer ladite image et des données biométriques de l'utilisateur conservées dans une base de données distante ou dans un support mémoire local.

Selon des caractéristiques particulières, le moyen d'identification de l'utilisateur comporte un moyen de capture d'une signature faite, sur ledit moyen de capture de signature, par l'utilisateur, et un moyen d'analyse de signature adapté à comparer ladite signature avec des données de signature de l'utilisateur conservées dans une base de données distante ou dans un support mémoire local.

Selon des caractéristiques particulières, le moyen d'identification de l'utilisateur comporte un moyen de capture d'écriture faite, sur ledit moyen de capture d'écriture, par l'utilisateur et un moyen d'analyse d'écriture adapté à comparer ladite écriture avec des données d'écriture de l'utilisateur conservées dans une base de données distante ou dans un support mémoire local.

Selon des caractéristiques particulières, le moyen d'identification de l'utilisateur comporte un capteur d'empreinte digitale de l'utilisateur et un moyen d'analyse-d'empreinte digitale adapté à comparer ladite empreinte digitale et des données d'empreinte digitale de l'utilisateur conservées dans une base de données distante ou dans un support mémoire local.

Selon des caractéristiques particulières, le moyen d'identification de l'utilisateur comporte un capteur de voix de l'utilisateur et un moyen d'analyse d'empreinte vocale adapté à comparer l'empreinte vocale de l'utilisateur et des données d'empreinte vocale de l'utilisateur conservées dans une base de données distante ou dans un support mémoire local.

Selon des caractéristiques particulières, le moyen d'identification de l'utilisateur comporte un moyen d'évaluation de risque relatif à l'identification de l'utilisateur et un moyen d'alarme adapté à transmettre une alarme à distance en cas d'évaluation de risque supérieure à une valeur prédéterminée.

Selon dés caractéristiques particulières, le moyen d'identification de l'utilisateur comporte un moyen de vérification que l'utilisateur dispose de toute l'information requise pour une procédure et, en cas de manque d'information requise, à transmettre à une base de données distante ou à un support mémoire local, une requête relative à au moins une information manquante.

Selon des caractéristiques particulières, le moyen d'identification de l'utilisateur comporte un capteur de voix de l'utilisateur et un moyen de reconnaissance vocale adapté à reconnaître des paroles prononcées par l'utilisateur.

Selon des caractéristiques particulières, le moyen d'identification de l'utilisateur comporte un moyen de capture d'écriture de l'utilisateur adapté à reconnaître des symboles et/ou des mots écrits par l'utilisateur sur une interface dudit moyen de capture d'écriture.

Selon des caractéristiques particulières, le dispositif tel que succinctement exposé ci-dessus comporte un moyen de demande d'informations complémentaires à une base de données distante ou à un support mémoire local.

Grâce à ces dispositions, si une information manque, par exemple une preuve de domiciliation, le dispositif recherche si une telle information n'a pas déjà été enregistrée dans une base de données ou un support mémoire local, ce qui permet de faire gagner du temps à l'utilisateur.

Selon des caractéristiques particulières, le dispositif tel que succinctement exposé ci-dessus comporte un moyen de transmission d'informations saisies par l'utilisateur ou par le représentant de l'organisation ou reçue de la part d'une base de données distante ou d'un support mémoire local à un terminal tiers et un moyen d'orientation de l'utilisateur vers ledit terminal tiers.

Selon des caractéristiques particulières, le dispositif tel que succinctement exposé ci-dessus comporte un moyen de transfert de données d'identification de l'utilisateur à une base de données distante ou dans un support mémoire local.

Selon des caractéristiques particulières, le dispositif tel que succinctement exposé ci-dessus comporte un moyen d'analyse du comportement de l'utilisateur.

Selon des caractéristiques particulières, le dispositif tel que succinctement exposé ci-dessus comporte un moyen de génération d'un assistant virtuel, un moyen d'affichage d'une image de synthèse dudit assistant virtuel et un moyen de diffusion d'une voix synthétique dudit assistant virtuel.

Selon des caractéristiques particulières, le dispositif tel que succinctement exposé ci-dessus comporte un moyen de reconnaissance de langage naturel adapté à traiter le langage naturel, écrit ou parlé, mis en oeuvre par l'utilisateur au cours d'une interaction avec ledit dispositif.

Un quatrième aspect de la présente invention vise à améliorer la détection de risques de falsification d'identité ou de documents.

A cet effet, la présente invention vise, selon son quatrième aspect, un dispositif d'interaction entre un utilisateur et une organisation, caractérisé en ce qu'il comporte :
- un moyen d'analyse de comportement de l'utilisateur et
- un moyen d'évaluation de risque en fonction de l'analyse de comportement de l'utilisateur.

Selon des caractéristiques particulières, le moyen d'analyse de comportement de l'utilisateur est adapté à traiter une évolution de comportement en réponse à des questions ou demandes fournies par le dispositif.

Selon des caractéristiques particulières, le moyen d'analyse de comportement est adapté à estimer une agitation physique d'au moins une partie du corps de l'utilisateur et à déterminer l'évolution de cette agitation physique.

Grâce à chacune de ces dispositions, on peut déterminer si des questions ou demandes gênent l'utilisateur.

D'autres avantages, buts et caractéristiques de la présente invention ressortiront de la description qui va suivre, faite dans un but explicatif et nullement limitatif en regard du dessin annexé dans lequél :
- la figure 1 représente, sous forme d'un schéma fonctionnel, un mode de réalisation particulier du dispositif d'interaction objet de la présente invention comportant une borne interactive,
- les figures 2A et 2B représentent, sous forme d'un logigramme, une succession d'étapes mises en oeuvre dans un mode de réalisation particulier du procédé objet de la présente invention,
- la figure 3 représenté, sous forme d'un schéma fonctionnel, un mode de réalisation particulier du dispositif objet de la présente invention comportant une station de travail et
- la figure 4 représente, sous forme d'un schéma bloc fonctionnel, des fonctions successivement mises en oeuvre dans un mode de réalisation particulier du procédé et du dispositif objets de la présente invention.

Dans toute la description, on appelle « type de document », une caractérisation de la signification de documents, par exemple permis de conduire, passeport, déclaration de revenus, constat amiable, plusieurs documents entrant dans le même type de document. Dans la description, on appelle « type d'information », une caractérisation de la signification d'information, par exemple, nom, prénom, adresse, numéro de sécurité sociale. Dans toute la description, le terme « document » désigne des documents présents sur un support physique présentant des informations visibles et/ou lisibles à l'oeil nu et des sources ou images informatiques de tels documents. Il s'agit, en particulier, de documents pas ou peu structurés, à la différences de codes sources, de codes compilés ou de bases de données, dont la signification de l'information requiert un traitement, par exemple d'image.

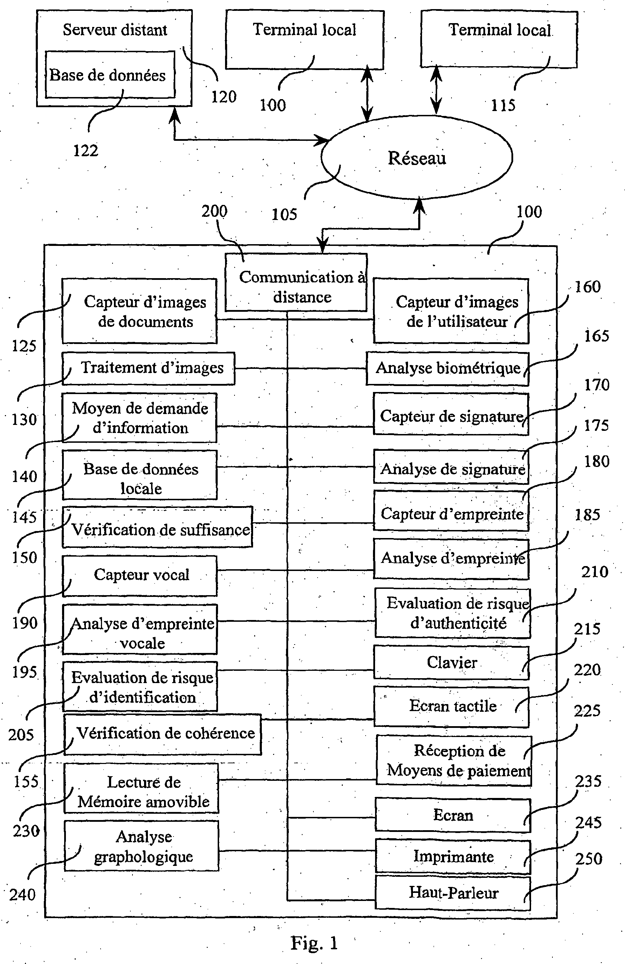

On observe, en figure 1, une borne interactive 100 reliée, par l'intermédiaire d'un réseau informatique 105, à des terminaux locaux 110 et 115 et à un serveur distant 120 conservant une base de données distante 122. La borne interactive 100 comporte :
- un moyen de capture d'images de documents 125,
- un moyen de traitement d'images 130 provenant du moyen de capture d'images 125, adapté à extraire des paramètres de fonctionnement desdites images,
- un moyen de demande d'information complémentaire 140,
- une base de données locale 145,
- un moyen de vérification 150 que l'utilisateur dispose de toute l'information requise pour une procédure,
- un moyen de vérification de cohérence 155 entre des informations extraites par ledit moyen de traitement d'images 130,
- un capteur d'image d'une partie du corps de l'utilisateur 160,
- un moyen d'analyse biométrique 165,
- un moyen de capture d'une signature 170,
- un moyen d'analyse de signature 175,
- un capteur d'empreinte digitale de l'utilisateur 180,
- un moyen d'analyse d'empreinte digitale 185,
- un capteur de voix de l'utilisateur 190,
- un moyen d'analyse d'empreinte vocale 195,
- un moyen de communication à distance 200,
- un moyen d'évaluation de risque 205 relatif à l'identification de l'utilisateur
- un moyen d'évaluation de risque 210 relatif à l'authenticité d'un document,
- un clavier 215,
- un écran tactile 220,
- un moyen de réception de moyens de paiement 225,
- un moyen de lecture de mémoire amovible 230,
- un écran 235,
- un moyen d'analyse de caractéristiques graphologiques 240,
- une imprimante 245 et
- un haut-parleur 250.

Là borne interactive 100 prend la forme d'un meuble métallique et comporte un ordinateur de type connu, par exemple de type PC (acronyme de « personal computer » pour ordinateur individuel) relié, par des interfaces de type connu, au clavier 215, à l'écran tactile 220, au réseau informatique 105, au moyen de capture d'images de documents 125, au capteur d'image d'une partie du corps de l'utilisateur 160, au moyen de capture d'une signature 170, au capteur d'empreinte digitale de l'utilisateur 180, au capteur de voix de l'utilisateur 190, au moyen de réception de moyens de paiement 225, au moyen de lecture de mémoire amovible 230 et à l'écran 235.

De manière connue en soi, l'ordinateur comporte une unité centrale, une mémoire de masse, par exemple un disque dur, qui conserve la base de données locale 145 et des applications informatiques mettant en oeuvre les différentes fonctions de la borne interactive 100.

Le clavier 215 est de type connu. L'écran tactile 220 est superposé à l'écran 235, de manière connue en soi. Selon une première variante, le clavier 215 est remplacé ou complété par un logiciel de reconnaissance d'écriture manuscrite effectuée sur l'écran tactile 220 ou sur une tablette tactile (non représentée). Selon une deuxième variante, le clavier 215 est remplacé ou complété par un logiciel de reconnaissance de voix associé au capteur de voix de l'utilisateur 190 afin que l'utilisateur puisse interagir par la parole avec la borne. Préférentiellement, le clavier 215 et/ou les moyens de substitution ou de complément indiqués dans ces variantes sont associés à un logiciel adapté à traiter des demandes exprimées en langage naturel, écrit ou parlé. Le réseau informatique 105 est, par exemple, le réseau Internet, un réseau local ou un réseau intranet. Il permet de transmettre des données entre la borne interactive 100, les terminaux locaux 110 et 115 et le serveur distant 120, selon des protocoles de communication connus.

Le moyen de capture d'images de documents 125 est, par exemple, un scanneur de type connu, préférentiellement à plat, c'est-à-dire comportant une vitre sur laquelle l'utilisateur pose le document dont une image doit être captée ou à rouleaux déplaçant un document devant un capteur d'image linéaire, si une seule face du document doit être analysée ou devant deux capteurs d'image linéaires, si les deux faces d'un document doivent être traitées conjointement.

Le capteur d'image d'une partie du corps de l'utilisateur 160 est une caméra électronique à capteur d'image matriciel, par exemple de type CCD (charge coupled device pour dispositif à transfert de charges ou DTC) éventuellement complété par une source éclairage. Le capteur d'image 160 est, par exemple, adapté à capter une image ou plusieurs images du corps complet de l'utilisateur, du visage de l'utilisateur, de son iris, ou d'une main de l'utilisateur posée sur un fond clair. En variante, deux caméras sont mises en oeuvre. Par exemple, ces deux caméras peuvent être utilisées pour effectuer une reconnaissance de visage en trois dimensions, selon des techniques connues, pour sélectionner celle des images qui présente la meilleure qualité en vue du traitement d'image considéré (la qualité étant définie en amont en termes de contraste, éclairage, reflet ou fond, par exemple, ou, en aval, par les résultats des traitements d'image obtenus), ou pour capter des images de deux parties différentes du corps de l'utilisateur (par exemple le visage et la main placée sur une partie du dispositif).

Le moyen de capture d'une signature 170 est, par exemple, constitué d'un stylet que l'utilisateur utilise pour réaliser une signature sur l'écran tactile 220 ou sur un écran tactile dédié, de dimension réduite. Le moyen de capture de signature fournit à l'ordinateur, à chaque instant au cours de la signature, la position de l'extrémité du stylet et, éventuellement, la force d'appui sur l'écran tactile, force déterminée en fonction du nombre de points de l'écran tactile affectés par l'appui de l'extrémité du stylet ou d'un capteur de pression incorporé dans le stylet.

Le capteur d'empreinte digitale de l'utilisateur 180 est de type connu, par exemple à vitre sur laquelle l'utilisateur appui le doigt demandé et à caméra captant l'image de l'empreinte digitale à travers ladite vitré.

Le capteur de voix de l'utilisateur 190 est un microphone de type connu. Le moyen de réception de moyens de paiement 225 est de type connu, par exemple à lecteur de carte bancaire à mémoire ou à bande magnétique, à récepteur de billets et/ou de pièces de monnaie ou à récepteur de chèques. Le moyen de lecture de mémoire amovible 230 est adapté à lire une mémoire amovible, par exemple une carte à mémoire (en anglais smartcard), une « clé USB », c'est-à-dire un dispositif comportant une mémoire et une interface enfichable dans une interface correspondante de la borne 100, ou une carte dite « SD » ou memory stick, un disque compact.

Le moyen de traitement d'images 130 provenant du moyen de capture d'images 125 est adapté à fournir, à partir de l'image captée, des données représentatives du type de document dont l'image a été fournie. A cet effet, le moyen de traitement d'images 130 repère des éléments graphiques qui caractérisé le document, par exemple, ses lignes verticales ou horizontales, ses codes à barre et/ou son identification écrite, et compare ces caractéristiques avec celles, conservées dans la base de données locale 145, de tous les types de documents appris au cours d'une phase d'apprentissage ou définis de manière explicite dans une base de données. Un exemple de procédé pouvant être mis en oeuvre par le moyen de traitement d'images 130 est décrit dans le document FR 01 07012 déposé le 25 mai 2001, incorporé ici par référence.

Le moyen de traitement d'images 130 fournit aussi des données représentatives des zones du document dans lesquelles l'utilisateur a effectué une inscription et, préférentiellement, de la signification de ces inscriptions. Il met en oeuvre des techniques connues, par exemple à reconnaissance optique de caractères (en anglais Optical Character Recognition ou OCR).

Dans le cas où le document comporte une photographie de l'utilisateur, par exemple une pièce d'identité, le moyen de traitement d'images 130 repère cette photographie (par analyse des niveaux de gris ou de couleurs et/ou des gradients de ces niveaux qui sont, en général, plus faible localement que sur le reste du document), l'extrait et la met dans un espace mémoire spécifique.

Dans le cas où le document comporte une signature de l'utilisateur, par exemple une pièce d'identité ou un formulaire de demande, le moyen de traitement d'images 130 repère cette signature (par analyse des lignes obliques, des intersections de lignes et/ou d'une forme géométrique exinscrite, ces éléments étant des indicateurs d'une signature), l'extrait et la met dans un espace mémoire spécifique.

A partir de ces données, le moyen de traitement d'images 130 extrait au moins un paramètre de fonctionnement et fournit une information représentative de données à demander, en complément du document, à l'utilisateur.

A cet effet, le moyen de traitement d'images 130 met en oeuvre une base de données de procédures qui, pour chaque type de document, indique les zones du document qui doivent être complétées, les documents complémentaires nécessaires, la nécessité, ou non d'une identification de l'utilisateur, la nécessité, ou non, que l'utilisateur effectue un paiement.

Le moyen de demande d'information complémentaire 140 est constitué de l'écran 235 et, éventuellement, du haut-parleur 250 associé à un logiciel de synthèse vocale. Il est adapté à indiquer à l'utilisateur les informations et documents requis pour réaliser la procédure identifiée par le moyen de traitement d'images (si plusieurs procédures sont possibles, en fonction du document, le moyen de demande d'information demande à l'utilisateur celle qu'il veut accomplir, si cette question n'a pas déjà été posée préliminairement à la capture d'image du document et l'utilisateur sélectionne, dans un menu, la procédure choisie).

La base de données locale 145 conserve des informations nécessaires au fonctionnement de la borne interactive 100, notamment les listes de documents et informations nécessaires pour des procédures et des données graphiques caractéristiques de documents.

Le moyen de vérification de cohérence 155 entre des informations extraites par le moyen de traitement d'images 130 est adapté à vérifier que les significations dès inscriptions faites par l'utilisateur dans le même document, dans plusieurs documents ou par rapport à des informations complémentaires collectées auprès de l'utilisateur ou de bases de données sont cohérentes. Cette vérification de cohérence consiste, par exemple, à effectuer une comparaison d'informations de même type, c'est-à-dire dont l'identifiant (nom, prénoms, adresse, numéro de sécurité sociale, par exemple) est identique. Ainsi, les inscriptions dans les champs correspondant aux mêmes informations sont cohérentes si elles sont identiques entre elles. De même, les signatures peuvent être comparées entre elles, par exemple en analysant les positions des croisements de lignes et les répartitions d'encre entre différentes zones (par exemple quatre quadrans d'un rectangle exinscrit de la signature).

La vérification de cohérence effectuée par le moyen de vérification de cohérence 155 s'étend à la vérification de cohérence entre les contenus des documents numérisés et ceux des documents relatifs au même utilisateur conservés dans une base de données distance ou dans un support de mémoire local. Par exemple, une demande d'allocation pourra être considérée comme incohérente avec une déclaration de hauts revenus. Eventuellement, la vérification de cohérence est effectuée en tenant compte de seuils correspondant à des critères d'alerte d'autres organisations. Par exemple, une demande de crédit faisant dépasser les seuils légaux concernant la capacité de remboursement peut déclencher une alerte locale ou à distance, même si l'utilisateur n'a pas déclaré l'ensemble de ses crédits en cours.

Le moyen d'analyse biométrique 165 est adapté à extraire des caractéristiques biométriques de l'image d'une partie du corps de l'utilisateur et à les comparer à des caractéristiques extraites d'une photographie dont une image est captée par le moyen de capture d'image d'un document ou d'une base de données lointaine conservée par le serveur distant 120 ou dans un support mémoire local (puce, clef usb, smartcard, ...).

En variante, le moyen d'analyse biométrique 165 effectue une analyse de comportement, de posture et/ou d'évolution d'expression sur le visage de l'utilisateur. Le moyen d'analyse biométrique est ainsi un moyen d'analyse de comportement de l'utilisateur, préférentiellement adapté à traiter une évolution de comportement en réponse à des questions ou demandes fournies par le dispositif. Préférentiellement, ce moyen d'analyse de comportement est adapté à estimer une agitation physique d'au moins une partie du corps de l'utilisateur (main, pied, jambe, visage, bouche, yeux, corps entier), par exemple en amplitude, vitesse et/ou fréquence de mouvements, et à déterminer l'évolution de cette agitation physique. On détermine ainsi si des questions ou demandes gênent l'utilisateur.

Le moyen d'analyse de signature 175 est adapté à extraire des caractéristiques du tracé (position, vitesse et/ou appui sur l'écran tactile) d'une signature faite par l'Utilisateur avec le moyen de capture d'une signature 170 et à les comparer à des caractéristiques extraites d'une signature dont une image est captée par le moyen de capture d'image d'un document ou d'une base de données lointaine conservée par le serveur distant 120 ou dans un support mémoire local (puce, clef usb, smartcard, ...).

En variante, le moyen d'analyse de signature effectue, de la même manière, une analyse d'écriture cursive de l'utilisateur. Ainsi, on utilise l'écriture pour identifier l'utilisateur soit en référence à des caractéristiques extraites de l'écriture manuscrite sur les documents analysés ou d'une base de données lointaine conservée par le serveur distant ou dans un support mémoire local. Le moyen d'analyse d'empreinte digitale 185 est adapté à extraire des caractéristiques de l'empreinte digitale de l'utilisateur provenant d'un capteur d'empreinte digitale de l'utilisateur 180 et à les comparer à des caractéristiques extraites d'une empreinte digitale dont une image est captée par le moyen de capture d'image d'un document ou d'une base de données lointaine conservée par le serveur distant 120 ou dans un support mémoire local (puce, clef usb, smartcard, ...).

Le moyen d'analyse d'empreinte vocale 195 est adapté à extraire des caractéristiques de la voix de l'utilisateur provenant d'un capteur de voix 190 et à les comparer à des caractéristiques correspondantes provenant d'une base de données lointaine conservée par le serveur distant 120 ou dans un support mémoire local (puce, clef usb, smartcard, ...).

En variante, le moyen d'analyse d'empreinte vocale 195 analyse l'évolution de la voix en réponse à des questions posées par un assistant virtuel ou réel pour détecter des indices de doute ou de mensonge.

Avec le moyen de communication à distance 200, par exemple un modem, la borne interactive fournit au serveur distant les caractéristiques d'identification de l'utilisateur déterminées par les moyens d'analyse. La borne peut aussi enregistrer ou transmettre au serveur tout ou partie de ce qui a été capté au cours de la transaction avec l'utilisateur, y compris les documents, les images et les sons captés pour :
- archivage et preuve si besoin,
   analyse temps réel ou a posteriori par un opérateur qui peut détecter des comportements bizarres,
- analyse automatique par la machine qui peut détecter un comportement "anormal".

A tout moment, l'utilisateur peut demander une assistance par l'utilisation de l'interface utilisateur de la borne interactive, par exemple par appui sur une touche dédiée ou par demande orale. Dans ce cas, la borne interactive affiche d'abord un assistant virtuel présentant un visage synthétique qui articule les messages vocaux transmis par le haut-parleur. Si l'aide ne satisfait pas l'utilisateur, par l'intermédiaire du moyen de communication à distance, la borne interactive met l'utilisateur en relation avec un assistant réel distant. Cette communication comporte la transmission de l'ensemble des images de documents que l'utilisateur a fourni ainsi que ses réponses aux questions posées par la borne interactive. La communication avec l'assistant réel est à la fois orale et visuelle, chaque interlocuteur voyant l'image et entendant la voix de l'autre interlocuteur.

Une fois l'ensemble des vérifications nécessaires et des échanges de questions et réponses effectués, en fonction de critères prédéterminés, par exemple les spécialités ou langues pratiquées par les préposés, la borne interactive 100 oriente l'utilisateur vers l'un des terminaux locaux 110 et 115, imprime un ticket comportant un numéro d'ordre de l'utilisateur pour le guichet concerné et transmet, parallèlement, toutes les informations captées à ce terminal afin que le préposé dispose de toute l'information nécessaire à son travail, avant même l'arrivée de l'utilisateur.

Le moyen d'analyse de caractéristiques graphologiques 240 est adapté à analyser les caractéristiques graphologiques des inscriptions manuscrites portées sur le ou les documents dont des images ont été captées par le moyen de capture d'images de documents 125 pour déterminer une mesure de cohérence de la graphie de ces inscriptions.

Dans la borne 100 ou, en variante, dans un terminal local ou dans le serveur distant, le moyen d'évaluation de risque 205 relatif à l'identification de l'utilisateur et le moyen d'évaluation de risque 210 relatif à l'authenticité d'un document fournissent une estimation de ces risques, en fonction des données captées par la borne 100 ou des analyses effectuées par la borne 100. Si l'un des risques est supérieur à une valeur prédéterminée qui lui correspond, une alarme est transmise au terminal local en question, par exemple sous forme d'une zone d'affichage qui passe au rouge.

Par exemple, le moyen d'évaluation de risque 205 relatif à l'identification de l'utilisateur mesure les écarts entre les caractéristiques biométriques, les caractéristiques de signature, l'empreinte digitale et/ou l'empreinte vocale captées par la borne interactive 100, avec les caractéristiques équivalente provenant des documents ou de la base de données distante ou d'un support mémoire local (puce, clef usb, smartCard, ...), les pondère en fonction de la fiabilité de chacune de ces analyses (par exemple l'analyse d'empreinte digitale, actuellement considérée comme très fiable, est dotée d'un poids plus élevé que l'analyse de signature, considérée comme moins fiable) et détermine une évaluation globale, par exemple comme le barycentre des différences normalisées affectées de leurs poids respectifs.

Par exemple, le moyen d'évaluation de risque 210 relatif à l'authenticité, de document mesure les écarts entre les couleurs de fond du document (pour détecter les grattages locaux) et les écarts entre les caractéristiques graphologiques des inscriptions portées par l'utilisateur, mesurées par le moyen d'analyse de caractéristiques graphologiques 240. En variante, on utilise l'écriture manuscrite de l'utilisateur pour authentifier les documents, en comparant des caractéristiques graphologiques de l'écriture portée sur les documents avec des caractéristiques graphologiques correspondantes conservées dans une base de données lointaine ou dans un support de mémoire local.

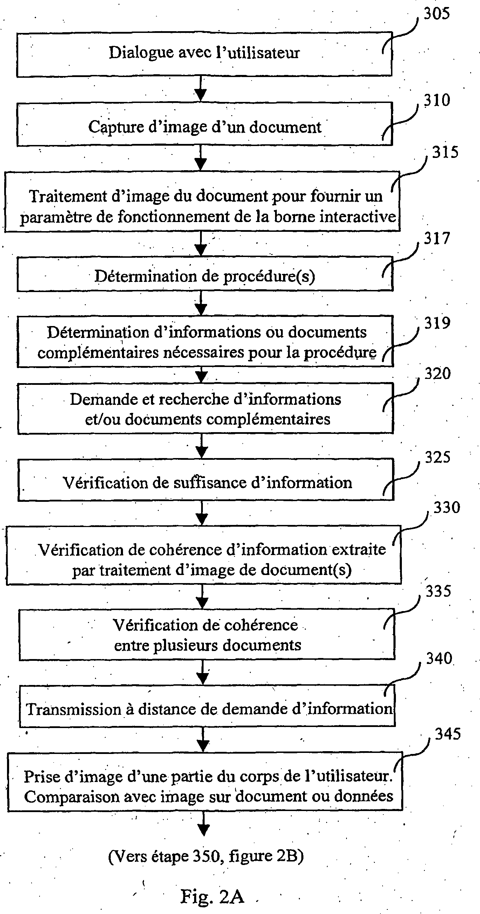

On observe, en figure 2A, une étape 305 de dialogue avec l'utilisateur, par exemple en mettant en oeuvre une interface graphique, un écran tactile, une tablette tactile, un logiciel de reconnaissance d'écriture manuscrite, un logiciel de reconnaissance de voix associé au capteur de voix de l'utilisateur. Préférentiellement, au cours de l'étape 305, on traite des demandes exprimées en langage naturel, écrit ou parlé.

Au cours dé cette étape de dialogue 305, l'utilisateur désigne une procédure qu'il souhaite réaliser.

Puis, au cours d'une étape 310, l'utilisateur passe un document dans un moyen de capture d'image, par exemple un scanneur et le scanneur fournit une image numérique du document.

Au cours d'une étape 315, l'image du document est traitée pour fournir au moins une caractéristique de document permettant de l'identifier. Au cours de l'étape de traitement 315, on vérifie aussi que le document dont une image a déjà été captée comporte toute l'information requise pour une procédure et, en cas de manque d'information requise, on définit une demande d'information représentant chacune des informations manquantes sur le document. Ainsi, si un utilisateur n'a pas correctement complété et/ou signé un formulaire, on définit une demande d'information représentant les informations manquantes.

Puis, au cours d'une étape 317, on détermine le type de document parmi une pluralité de types de documents et on identifie une procédure à laquelle correspond le type de document reconnu. Puis, au cours d'une étape 319, on recherche, dans une base de données, les informations complémentaires ou documents complémentaires nécessaires, conjointement au document dont une image a déjà été captée, pour la réalisation de la procédure et on définit au moins une demande d'informations à transmettre à l'utilisateur concernant au moins une partie des informations complémentaires nécessaires.

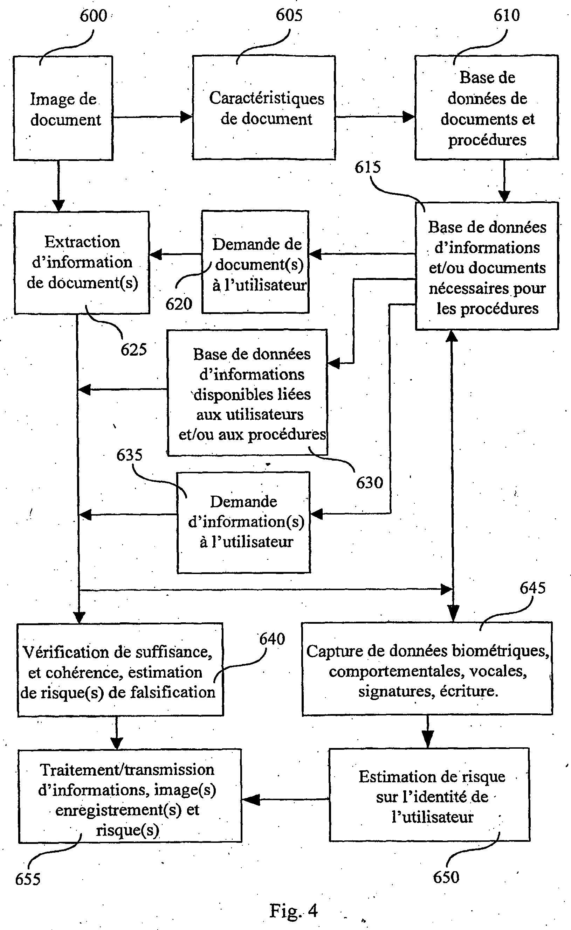

On observe que, comme exposé en regard de la figure 4, au moins une autre demande d'informations complémentaires nécessaires à la réalisation de la procédure peut être transmise à une base de données liées aux procédures et/ou aux utilisateurs.

Au cours d'une étape 320, la borne interactive demande de l'information complémentaire à l'utilisateur, l'information complémentaire demandée dépendant d'au moins un paramètre de fonctionnement extrait au cours de l'étape de traitement 315.

Au cours d'une étape 325, la borne interactive vérifie que l'utilisateur dispose de toute l'information requise pour une procédure et, en cas de manque d'information requise, elle transmet à une base de données distante ou à un support mémoire local (puce, clef usb, smartcard, ...) une requête relative à au moins une information manquante. Cette vérification peut être effectuée par analyse de documents dont une image est capturée et/ou par questions/réponses effectuées par l'intermédiaire de l'interface utilisateur de la borne interactive. Eventuellement, d'autres documents sont demandés à l'utilisateur et on retourne à l'étape 310.

Au cours d'une étape 330, la borne interactive vérifie la cohérence des informations extraites au cours de l'étape de traitement d'image 315.

Dans le cas où plusieurs documents sont fournis par l'utilisateur, au cours d'une étape 335, la borne interactive vérifie la cohérence des informations extraites de plusieurs documents au cours de plusieurs étapes de traitement d'image 315.

La vérification de cohérence effectuée au cours des étapes 330 et 335 s'étend à la vérification de cohérence entre les contenus des documents numérisés et ceux des documents relatifs au même utilisateur conservés dans une base de données distance ou dans un support de mémoire local. Eventuellement, la vérification de cohérence est effectuée en tenant compte de seuils correspondant à des critères d'alerte d'autres organisations.

Au cours d'une étape 340, la borne interactive transmet une demande d'informations complémentaires à une base de données distante, ou à un support mémoire local (puce, clef usb, smartcard, ...) l'information complémentaire demandée dépendant d'au moins un paramètre de fonctionnement extrait par le moyen de traitement d'image.

Au cours d'une étape 345, la borne interactive prend une image d'une partie du corps de l'utilisateur et analyse cette image selon des techniques de biométrie pour comparer cette dite image et une image d'une photographie de l'utilisateur présente sur une pièce d'identité captée au cours d'une étape 310. Si une telle photographie n'est pas fournie par l'utilisateur ou en complément de l'analyse de cette photographie, au cours de l'étape 345, la borne interactive compare l'image de l'utilisateur et des données biométriques de l'utilisateur conservées dans une base de données distante ou dans un support mémoire local (puce, clef usb, smartcard, ...).

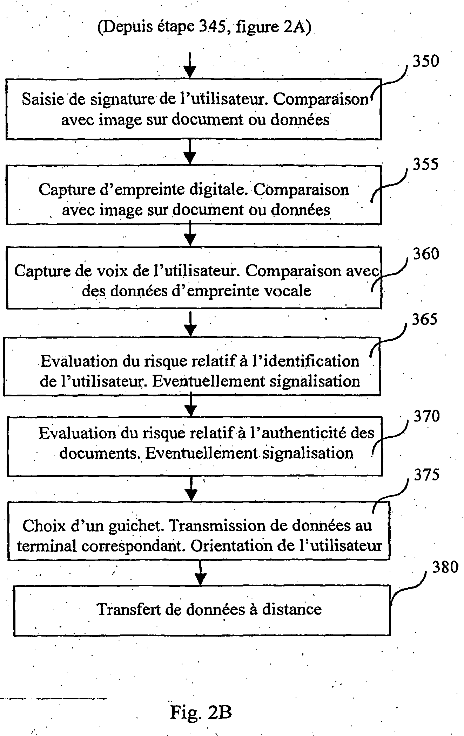

Au cours d'une étape 350 (figure 2B), la borne interactive demande à l'utilisateur de signer sur l'écran tactile avec un stylet, l'écran tactile fournit une succession de positions de l'extrémité du stylet ainsi, optionnellement, qu'une indication de force exercée par le stylet et la borne compare la signature ainsi reconstituée avec une image d'une signature présente sur une pièce d'identité captée au cours d'une étape 310. Si aucune image de signature n'a été fournie sur un document ou en complément de la première analyse, au cours de l'étape 350, la borne interactive compare la signature reconstituée avec des données de signature de l'utilisateur conservées dans une base de données distante ou dans un support mémoire local (puce, clef usb, smartcard, ...).

En variante, l'analyse de signature est complétée ou remplacée par une analyse d'écriture cursive de l'utilisateur. Ainsi, on utilise l'écriture pour identifier l'utilisateur soit en référence à des caractéristiques extraites de l'écriture manuscrite sur les documents analysés ou d'une base de données lointaine conservée par le serveur distant ou dans un support mémoire local.

Au cours d'une étape 355, la borne interactive capte une empreinte digitale de l'utilisateur et analyse cette empreinte digitale en comparaison avec une image d'une empreinte digitale de l'utilisateur présente sur une pièce d'identité captée au cours d'une étape 310. Si aucune empreinte digitale n'a été fournie sur un document ou en complément de cette analyse, au cours de l'étape 355, la borne interactive analyse l'empreinte digitale en comparaison avec des données d'empreinte digitale de l'utilisateur conservées dans une base de données distante ou dans un support mémoire local (puce, clef usb, smartcard, ...).

Au cours d'une étape 360, la borne interactive capte la voix de l'utilisateur et analyse une empreinte vocale de l'utilisateur en comparaison avec des données d'empreinte vocale de l'utilisateur conservées dans une base de données distante ou dans un support mémoire local (puce, clef usb, smartcard, ...).

Au cours d'une étape 365, la borne interactive effectue une évaluation de risque relatif à l'identification de l'utilisateur et au cas où ce risque est supérieur à une valeur prédéterminée, transmet une alarme à distance.

Au cours d'une étape 370, la borne interactive effectue une évaluation de risque relatif à l'authenticité d'un document et, au cas où ce risque est supérieur à une valeur prédéterminée, transmet une alarme à distance. Au cours d'une étape 375, la borne interactive choisit, en fonction de la procédure, de la disponibilité des guichetiers et de la langue, un guichet correspondant à un terminal local, transmet à distance chaque image d'un document à ce terminal local tiers et oriente l'utilisateur vers ce terminal local.

Au cours d'une étape 380, la borne interactive transfère l'ensemble des données d'identification, de documents fournis, de procédure demandée à une base de données distante à fin d'archivage et de traitement pour de futures identifications.

La borne ou le serveur peuvent ainsi enregistrer tout ou partie de ce qui a été capté au cours de la transaction avec l'utilisateur, y compris les documents, les images et les sons captés pour :
- archivage et preuve si besoin,
- analyse temps réel ou a posteriori par un opérateur qui peut détecter des comportements bizarres,
- analyse automatique par la machine qui peut détecter un comportement "anormal".

On donne, ci-après, un exemple d'utilisation de la présente invention dans le cas de formalités administratives, étant entendu que la présente invention ne se limite pas à ce type de procédures mais s'étend à toutes les procédures entre un utilisateur et une organisation publique ou privée. Grâce à la mise en oeuvre de la présente invention, un utilisateur, par exemple M. Martin, ira directement à la borne interactive en entrant dans un local administratif, sans attendre en ligne. Il choisira "demande de passeport", par exemple, et la borne interactive lui demandera d'introduire ses documents dans le scanner (pièce d'identité en cours ou périmée, formulaire de demande de passeport, preuve de résidence, par exemple). La camera prendra des images du visage de M. Martin et les comparera à la photographie d'identité présente sur la pièce d'identité numérisée, demandera à M. Martin de signer sur un écran tactile, et comparera la signature réalisée avec la signature de la pièce d'identité, demandera à M. Martin dé fournir son empreinte digitale et la comparera avec celle de la pièce d'identité. La borne pourra alors valider l'identité de M. Martin et traiter automatiquement les documents : les identifier vérifier leur complète documentation et la cohérence des données qui y sont portées et lire les contenus.

Dans l'exemple qui précède, on met en oeuvre plusieurs étapes de vérification d'identité de l'utilisateur. Dans d'autres modes de mise en oeuvre de la présente invention, le nombre et le choix des étapes d'identification effectuées dépend à la fois des performances de chaque type d'étape et du niveau de sécurité requis. Par exemple, s'il s'agit d'une transaction sans grand risque, l'identification sera plus rapide mais moins sûre que pour une transaction considérée comme risquée.

Si un document est manquant au regard de la procédure administrative demandée ou si une information est manquante sur les documents, la borne les demandera à M. Martin et, en cas de non-disponibilité, la procédure pourra être interrompue, M. Martin ayant alors gagné le délai d'attente et l'administration ayant évité de perdre du temps pour entamer une procédure qui n'aurait pas pu aboutir.

A tout moment, M. Martin pourra demander de l'aide par l'intermédiaire de la borne interactive et être aidé par un assistant virtuel auquel il posera des questions en langage -naturel. S'il n'est pas satisfait des réponses, M. Martin pourra accéder à un assistant réel, par l'intermédiaire de la borne interactive et d'une vidéo-conférence avec un assistant lointain qui aura alors accès à toutes les informations fournies par M. Martin et aux images des documents.

Pour payer les éventuels redevances ou taxes correspondant à la procédure, M. Martin pourra utiliser ses moyens de paiement sur la borne interactive. Lorsque toutes ces procédures automatiques auront été effectuées, la borne interactive orientera M. Martin vers le guichet correspondant au mieux à sa demande (langue, disponibilité et procédure demandée). Le terminal local du guichet recevra alors automatiquement toutes les informations concernant M. Martin et la procédure demandée, ainsi que les images des documents fournis par M. Martin ou par une base de données administrative. De plus, le terminal recevra une évaluation du risque d'identification de M. Martin ou d'authenticité de ses documents ou une alarme pour les seuls cas où cette évaluation représente un risque supérieur à une valeur limite prédéterminée. Le guichetier pourra alors préparer sa procédure ou faire appel à d'autres services non accessibles au public avant même de recevoir M. Martin.

Grâce à la mise en oeuvre de la présente invention, M. Martin aura gagné du temps et l'administration aura effectué un travail plus fiable, plus performant et plus-rapide qu'en l'absence de borne. De plus, elle aura emmagasiné des informations utiles pour effectuer et sécuriser les procédures administratives futures que pourrait demander M. Martin.

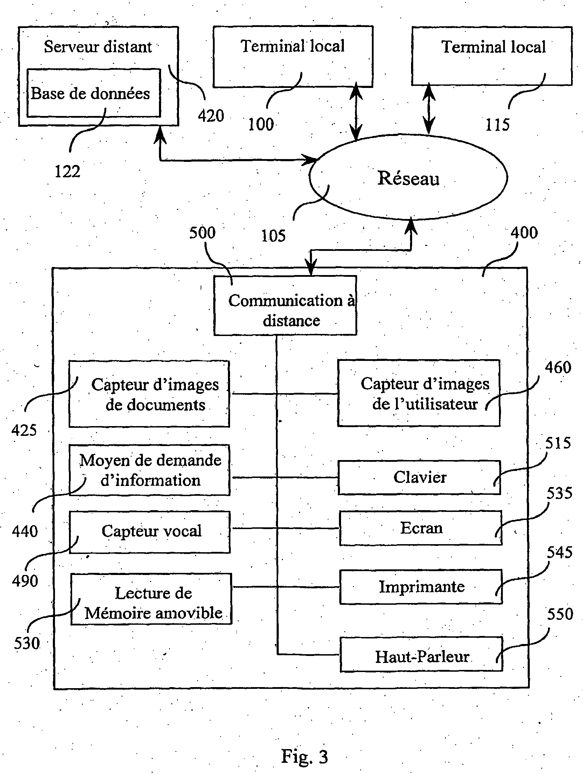

La figure 3 concerne particulièrement la réalisation de procédures multiples, basées sur au moins un document, depuis une station de travail à domicile ou au bureau. Grâce à ce type de mise en oeuvre de la présente invention, un utilisateur peut effectuer des démarches administratives, fiscales, sociales, d'assurance, à distance, en fournissant des documents, tout en procurant aux organisations qui gèrent les procédures correspondantes un niveau de sécurité au moins égal à celui offert par un guichetier traditionnel.

De plus, le dispositif illustré en figure 3 permet de commencer une procédure depuis son domicile ou son bureau et, une fois validés les informations et documents nécessaires, de la poursuivre en se déplaçant dans des représentations de l'organisation concernée, et vice-versa.

On observe, en figure 3, une station de travail interactive 400 reliée, par l'intermédiaire du réseau informatique 105, aux terminaux locaux 110 et 115 et à un serveur distant 420 conservant la base de données distante 122. La station de travail interactive 400 comporte :
- un moyen de capture d'images de documents 425,
- un moyen de demande d'information complémentaire 440,
- un capteur d'image d'une partie du corps de l'utilisateur 460,
- un capteur de voix de l'utilisateur 490,
- un moyen de communication à distance 500,
- un clavier 515,
- un moyen de lecture de mémoire amovible 530,
- un écran 535,
- une imprimante 545 et
- un haut-parleur 550.

La station de travail interactive 400 prend la forme d'un ordinateur de type connu, par exemple de type PC (acronyme de « personal computer » pour ordinateur individuel) relié, par des interfaces de type connu, au clavier 515, au réseau informatique 105, au moyen de capture d'images de documents 425, au capteur d'image d'une partie du corps de l'utilisateur 460, au capteur de voix de l'utilisateur 490, au moyen de lecture de mémoire amovible 530 et à l'écran 535.

De manière connue en soi, l'ordinateur comporte une unité centrale, une mémoire de masse, par exemple un disque dur, qui conserve des applications informatiques mettant en oeuvre les différentes fonctions de la station de travail interactive 400.

Le clavier 515 est de type connu. Selon une variante, le clavier 515 est remplacé ou complété par un logiciel de reconnaissance de voix associé au capteur de voix de l'utilisateur 490 afin que l'utilisateur puisse interagir par la parole avec la station de travail 400. Le réseau informatique 105 est, par exemple, le réseau Internet. Il permet de transmettre des données entre la station de travail interactive 400, les terminaux locaux 110 et 115 et le serveur distant 420, selon des protocoles de communication connus.

Le serveur distant 420 met en oeuvre des applications informatiques pour implémenter le procédé objet de la présente invention en coopération avec la station de travail 400.

Par exemple, préférentiellement, le serveur 420 est doté d'un logiciel adapté à traiter des demandes exprimées en langage naturel par l'intermédiaire du clavier et/ou du capteur de voix de l'utilisateur 490.

Le moyen de capture d'images de documents 425 est, par exemple, un scanner de type connu, préférentiellement à plat, c'est-à-dire comportant une vitre sur laquelle l'utilisateur pose le document dont une image doit être captée.

Le capteur d'image d'une partie du corps de l'utilisateur 460 est une caméra électronique à capteur d'image matriciel, par exemple de type CCD (charge coupled device pour dispositif à transfert de charges ou DTC), par exemple sous la forme d'une caméra connue sous le nom de « webcam ». Le capteur d'image 460 est, par exemple, adapté à capter une image ou plusieurs images du visage de l'utilisateur.

Le capteur de voix de l'utilisateur 490 est un microphone de type connu. Le moyen de lecture de mémoire amovible 530 est adapté à lire une mémoire amovible, par exemple une carte à mémoire (en anglais smartcard), une « clé USB », c'est-à-dire un dispositif comportant une mémoire et une interface enfichable dans une interface correspondante de la station de travail 400, ou une carte dite « SD » ou memory stick, un disque compact.

Le moyen de traitement d'images du serveur 420 est adapté à fournir, à partir de l'image d'un document captée par le moyen de capture d'image de document 425, des données représentatives du type de document dont l'image a été fournie. A cet effet, le moyen de traitement d'images repère des éléments graphiques qui caractérise le document, par exemple, ses lignes verticales ou horizontales, ses codes à barre et/ou son identification écrite, et compare ces caractéristiques avec celles, conservées dans la base de données locale 122, de tous les types de documents appris au cours d'une phase d'apprentissage ou définis de manière explicite dans la base de données. Un exemple de procédé pouvant être mis en oeuvre par le moyen de traitement d'images est décrit dans le document FR 01 07012 déposé le 25 mai 2001, incorporé ici par référence.

Le moyen de traitement d'images fournit aussi des données représentatives des zones du document dans lesquelles l'utilisateur a effectué une inscription et, préférentiellement, de la signification de ces inscriptions. Il met en oeuvre des techniques connues, par exemple à reconnaissance optique de caractères (en anglais Optical Character Récognition ou OCR).

Dans le cas où le document comporte une photographie de l'utilisateur, par exemple une pièce d'identité, le moyen de traitement d'images repère cette photographie (par analyse des niveaux de gris ou de couleurs et/ou des gradients de ces niveaux qui sont, en général, plus faible localement que sur le reste du document), l'extrait et la met dans un espace mémoire spécifique.

Dans le cas où le document comporte une signature de l'utilisateur, par exemple une pièce d'identité ou un formulaire de demande, le moyen de traitement d'images repère cette signature (par analyse des lignes obliques, des intersections de lignes et/ou d'une forme géométrique exinscrite, ces éléments étant des indicateurs d'une signature), l'extrait et la met dans un espace mémoire spécifique.

A partir de ces données, le moyen de traitement d'images extrait au moins un paramètre de fonctionnement et fournit une information représentative de données à demander, en complément du document, à l'utilisateur.

A cet effet, le moyen de traitement d'images met en oeuvre une base de données de procédures qui, pour chaque type de document, indique les zones du document qui doivent être complétées, les documents complémentaires nécessaires, la nécessité, ou non d'une identification de l'utilisateur, la nécessité, ou non, que l'utilisateur effectue un paiement.

Le moyen de demande d'information complémentaire 440 est constitué de l'écran 535 et, éventuellement, du haut-parleur 550 associé à un logiciel de synthèse vocale. Il est adapté à indiquer à l'utilisateur les informations et documents requis pour réaliser la procédure administrative identifiée par le moyen de traitement d'images (si plusieurs procédures administratives sont possibles, en fonction du document, le moyen de demande d'information demande à l'utilisateur celle qu'il veut accomplir, si cette question n'a pas déjà été posée préliminairement à la capture d'image du document et l'utilisateur sélectionne, dans un menu, la procédure choisie).

La base de données 122 conserve des informations nécessaires au fonctionnement de la station de travail interactive 400, notamment les listes de documents et informations nécessaires pour des procédures administratives et des données graphiques caractéristiques de documents.

Le serveur 420 comporte un moyen de vérification de cohérence entre des informations extraites par le moyen de traitement d'images est adapté à vérifier que Jes significations des inscriptions faites par l'utilisateur dans le même document ou dans plusieurs documents sont cohérentes.

La vérification de cohérence effectuée par le moyen de vérification de cohérence s'étend à la vérification de cohérence entre les contenus des documents numérisés et ceux des documents relatifs au même utilisateur conservés dans une base de données distance ou dans un support de mémoire local. Eventuellement, la vérification de cohérence est effectuée en tenant compte de seuils correspondant à des critères d'alerte d'autres organisations.

Le serveur ,420 comporte un moyen d'analyse biométrique qui est adapté à extraire des caractéristiques biométriques de l'image d'une partie du corps de l'utilisateur et à les comparer à des caractéristiques extraites d'une photographie dont une image est captée par le moyen de capture d'image d'un document ou d'une base de données conservée par le serveur distant 420 ou dans un support mémoire local (puce, clef usb, smartcard, ...).

En variante, le moyen d'analyse biométrique effectue une analyse de comportement, de posture et/ou d'évolution d'expression sur le visage de l'utilisateur.

Le serveur 420 comporte un moyen d'analyse d'empreinte vocale qui est adapté à extraire des caractéristiques de la voix de l'utilisateur provenant d'un capteur de voix 490 et à les comparer à des caractéristiques correspondantes provenant d'une base de données conservée par le serveur 420 ou dans un support mémoire local (puce, clef usb, smartcard, ...).

En variante, le moyen d'analyse d'empreinte vocale 495 analyse l'évolution de la voix en réponse à des questions posées par un assistant virtuel ou réel pour détecter des indices de doute ou de mensonge.

Avec le moyen de communication à distance 500, par exemple un modem, la station de travail interactive fournit au serveur distant les caractéristiques d'identification de l'utilisateur déterminées par les moyens d'analyse. La station de travail peut aussi enregistrer ou transmettre au serveur tout ou partie de ce qui a été capté au cours de la transaction avec l'utilisateur, y compris les documents, les images et les sons captés pour :
- archivage et preuve si besoin,
- analyse temps réel ou a posteriori par un opérateur qui peut détecter des comportements bizarres,
- analyse automatique par la machine qui peut détecter un comportement "anormal".

A tout moment, l'utilisateur peut demander une assistance par l'utilisation de l'interface utilisateur de la station de travail interactive, par exemple par appui sur une touche dédiée ou par demande orale. Dans ce cas, la station de travail interactive affiche d'abord un assistant virtuel présentant un visage synthétique qui articule les messages vocaux transmis par le haut-parleur. Si l'aide ne satisfait pas l'utilisateur, par l'intermédiaire du moyen de communication à distance, la station de travail interactive met l'utilisateur en relation avec un assistant réel distant. Cette communication comporte la transmission de l'ensemble des images de documents que l'utilisateur a fourni ainsi que ses réponses aux questions posées par la station de travail interactive. La communication avec l'assistant réel est à la fois orale et visuelle, chaque interlocuteur voyant l'image et entendant la voix de l'autre interlocuteur.

Une fois l'ensemble des vérifications nécessaires et des échanges de questions et réponses effectués, en fonction de critères prédéterminés, par exemple les spécialités ou langues pratiquées par les préposés, le serveur 420 oriente l'utilisateur vers l'un terminaux locaux 110 et 115, c'est à dire vers un centre de réception de visiteurs comportant ce terminal et transmet, parallèlement, toutes les informations captées à ce terminal afin que le préposé dispose de toute l'information nécessaire à son travail, avant même l'arrivée de l'utilisateur.

Dans le serveur 420, un moyen d'évaluation de risque relatif à l'identification de l'utilisateur et un moyen d'évaluation de risque relatif à l'authenticité d'un document fournissent une estimation de ces risques, en fonction des données captées par la station de travail 400 ou des analyses effectuées par le serveur 420. Si l'un des risques est supérieur à une valeur prédéterminée qui lui correspond, une alarme est enregistrée par le serveur 420 et transmise au terminal local en question, par exemple sous forme d'une zone d'affichage qui passe au rouge.

Par exemple, le moyen d'évaluation de risque relatif à l'identification de l'utilisateur mesure les écarts entre les caractéristiques biométriques, les caractéristiques de signature, l'empreinte digitale et/ou l'empreinte vocale captées par la station de travail interactive 400, avec les caractéristiques équivalente provenant des documents ou de la base de données distante ou d'un support mémoire local (puce, clef usb, smartcard, ...), les pondère en fonction de la fiabilité de chacune de ces analyses (par exemple l'analyse d'empreinte digitale, actuellement considérée comme très fiable, est dotée d'un poids plus élevé que l'analyse de signature, considérée comme moins fiable) et détermine une évaluation globale, par exemple comme le barycentre des différences normalisées affectées de leurs poids respectifs.

Par exemple, le moyen d'évaluation de risque relatif à l'authenticité de document mesure les écarts entre les couleurs de fond du document (pour détecter les grattages locaux) et les écarts entre les caractéristiques graphologiques des inscriptions portées par l'utilisateur, mesurées par le moyen d'analyse de caractéristiques graphologiques. En variante, on utilise l'écriture manuscrite de l'utilisateur pour authentifier les documents, en comparant des caractéristiques graphologiques de l'écriture portée sur les documents avec des caractéristiques graphologiques correspondantes conservées dans une base de données lointaine ou dans un support de mémoire local.

On observe, en figure 4, une succession de fonctions mises en oeuvre dans des modes de réalisation particuliers du procédé et du dispositifs objets de la présente invention. La figure 4 ne représente qu'un agencement particulier de fonctions, auquel la présente invention ne se limite pas, de nombreux autres agencements se trouvant dans la portée de la présente invention.

Une fonction 600 de capture d'une image de document produit une image d'un document fourni par l'utilisateur, par exemple par mise en oeuvre d'un scanner. Une fonction 605 extrait des caractéristiques structurelles du document (dimensions, lignes et formes géométriques, couleurs, présence d'un identifiant de document, titre porté sur le document, ...). Une fonction 610 compare ces caractéristiques à des caractéristiques de documents conservées dans une base de données de documents associés à des procédures pour déterminer quelle(s) procédure(s) est(sont) associée(s) au type de document caractérisé par la fonction 605. Au cas où plusieurs procédures sont identifiées, l'utilisateur peut être interrogé sur la procédure qu'il souhaite faire effectuer. Dans des variantes, l'utilisateur est interrogé sur la procédure qu'il souhaite effectuer avant de présenter le premier document, la détermination de procédure effectuée par la fonction 610 se faisant sur un sous-ensemble de procédures défini en fonction des réponses de l'utilisateur.

Une fonction 615 interroge une base de données d'informations et/ou de documents complémentaires nécessaires pour les procédures afin de déterminer l'ensemble des informations nécessaires pour la procédure identifiée par la fonction 610, et parmi ces informations nécessaires :
- celles qui devraient être portées sur le document dont une image a déjà été captée,
- celles qui devraient être portées sur de ou les document(s) complémentaires nécessaire(s) à demander à l'utilisateur,
- celles qui se trouvent dans des bases de données d'informations disponibles liés aux utilisateurs et/ou aux procédures,
- celles qui devaient se trouver sur un support d'informations amovible de l'utilisateur et
- celles qu'il faut demander à l'utilisateur.

On observe que certaines de ces informations peuvent se trouver dans plusieurs ou tous ces sous-ensembles et, parfois, avec des contenus différents. Par exemple, l'adresse portée sur une pièce d'identité peut être obsolète, l'utilisateur ayant déménagé depuis la délivrance de la pièce d'identité.

On observe que la fonction 615 prend préférentiellement en compte, de manière itérative, le contenu de chaque document, information complémentaire ou support d'information électroniques portable fourni par l'utilisateur, pour déterminer l'information complémentaire nécessaire.

Ainsi, par exemple, pour une déclaration de revenu, selon les cases cochées et montants portés par l'utilisateur sur une déclaration sur support papier, la fonction 615 détermine les justificatifs complémentaires nécessaires, de manière itérative.

Les informations complémentaires à demander à l'utilisateur sont ainsi ordonnées afin que leur ordre d'obtention permettent de mettre à jour les informations complémentaires restant à demander à l'utilisateur.

Préférentiellement, la fonction 615 réalise aussi la sélection d'un vocabulaire associé à la procédure identifiée et aux documents mises en oeuvre au cours de cette procédure. Ce vocabulaire est utilisé par une fonction 625 décrite plus loin.

Une fonction 620 demande à l'utilisateur de présenter au moins un document nécessaire devant un moyen de capture d'images, par exemple un scanner, et commande le moyen de capture d'image pour le faire capter une image de chaque document complémentaire demandé:

La fonction 625 effectue l'extraction d'informations de chaque image d'un document fourni par l'utilisateur, y compris le premier document fourni, afin d'obtenir les informations nécessaires à la réalisation de la procédure, à la vérification de suffisance et de cohérence des informations collectées, à l'évaluation de risque concernant l'authenticité ou la falsification de document ou d'identité d'utilisateur. Chaque information extraite est associée à un identifiant lié à la position de l'information extraite dans le document, dont la signification est connue dans la base de données de documents, à une écriture imprimée se trouvant en regard de la position où cette information extraite a été lue ou à son contenu par référence à des règles explicites, implicites ou statistiques de signification de ce contenus.

En particulier, la fonction 625 met en oeuvre, pour chaque document complémentaire, les fonctions 605 et 610 pour déterminer le type de chaque document complémentaire et vérifier qu'il s'agit bien du type de document complémentaire demandé à l'utilisateur.

Une fonction 630 extrait de bases de données d'informations disponibles concernant des utilisateurs et des procédures, des informations complémentaires nécessaires à la procédure. Par exemple, ces informations complémentaires comportent la vérification que les documents présentés ou demandés et/ou les supports d'informations électroniques portables n'ont pas été volés ou perdus, des caractéristiques d'écriture ou de signature par l'utilisateur, des procédures déjà effectuées par l'utilisateur, des durées de validités de procédures, de documents ou de support d'informations électroniques portable.

Une fonction 635 demande à l'utilisateur des informations complémentaires à saisir, manuellement ou vocalement (en les prononçant) ou et/ou au moins un support d'information électroniques portable, par exemple une carte à mémoire d'assuré social ou de paiement.

Une fonction 640 collecte les informations fournies par les fonctions 625, 630 et 635 et vérifie la suffisance de ces informations vis-à-vis des informations nécessaires pour effectuer la procédure demandée. Par exemple, si un document n'a pas été correctement renseigné, si un document ou un support d'informations électronique portable est périmé, la fonction 640 signale cette insuffisance à l'utilisateur pour qu'il puisse remédier à cette situation, en retournant aux fonctions 600, 620 et/ou 635, respectivement.

La fonction 640 effectue aussi une vérification de cohérence des informations collectées, compare les informations de même type collectées et signale les incohérences à l'utilisateur, étant entendu que la cohérence de certaines informations, dont le contenu varie au cours de la vie de l'utilisateur (par exemple adresse ou numéro de pièces d'identité), n'est pas indispensable pour effectuer certaines procédures.

Enfin, la fonction 640 effectue une estimation de risque quant à l'authenticité du ou des documents dont une image a été captée, par exemple en fonction des caractéristiques d'écriture ou de signature de l'utilisateur, si ces caractéristiques ont été fournies par deux documents ou par au moins un document et la fonction 630.

Une fonction 645 effectue une capture de données biométriques, comportementales, vocales, de signature et/ou d'écriture de l'utilisateur, comme exposé en regard des figures 1 à 3. Une fonction 650 effectue une estimation de risque sur l'identité de l'utilisateur comme exposé en regard des figures 1 à 3.

Une fonction 650 indique à l'utilisateur si la procédure demandée peut être traitée et effectue la transmission des informations collectées, des images captées, d'enregistrement de la session d'interaction avec l'utilisateur et de risques estimés à un centre de traitement, automatique ou manuel, de la procédure demandée ou à un guichet comportant un terminal informatique vers lequel l'utilisateur est dirigé. On observe que ces informations peuvent enrichir la base de données mise en oeuvre par la fonction 630.

## Revendications

1. Dispositif (100, 400) de traitement d'une pluralité de procédures basées sur une pluralité de types de documents, **caractérisé en ce qu'**il comporte :
un moyen (125, 130, 215, 220, 425, 515) de sélection d'une procédure parmi ladite pluralité de procédures comportant :
un moyen de capture d'images (125, 425) de documents,
un moyen de traitement d'images (130) captées par le moyen de capture d'images, adapté à extraire des informations d'au moins une image de document captée par le moyen de capture d'images (125, 425), et à reconnaître un type de document dans ladite pluralité de types de documents, un moyen d'identification de procédure adapté à identifier une procédure à laquelle correspond ledit type de document ;
un moyen d'identification, dans une base de données (122, 145), d'informations complémentaires nécessaires pour la réalisation de ladite procédure, adapté à identifier au moins un document complémentaire ;
un moyen de demande d'information complémentaire (140, 440) à l'utilisateur, adapté d'une part, à demander à l'utilisateur au moins un document complémentaire identifié par le moyen d'identification d'informations complémentaire et, d'autre part, à commander un moyen de capture d'images (125, 425) pour le faire capter une image de chaque document complémentaire demandé, le moyen de traitement d'image étant adapté à vérifier le type de chaque document complémentaire dont une image est captée ; et
un moyen (155) de comparaison d'informations de même type extraites d'images de différents documents qui vérifie leur correspondance, le moyen de demande d'informations complémentaires (140, 440) étant adapté à signaler une absence de correspondance entre les informations de même type extraites d'images de différents documents.

2. Dispositif selon la revendication 1, qui comporte, en outre :
- un moyen de recherche d'informations complémentaires, dans une base de données (122), adapté à rechercher dans une base de données, au moins une information complémentaire identifiée par le moyen d'identification d'informations complémentaires et
- un moyen de comparaison d'au moins une information complémentaire fournie par un utilisateur en réponse à la demande d'informations complémentaires effectuée par le moyen de demande d'informations complémentaires et d'au moins une information complémentaire de même type fournie par le moyen de recherche d'informations complémentaires, le moyen de demande (235, 535) d'information étant adapté à signaler une absence de correspondance entre au moins une information complémentaire fournie par un utilisateur et une information complémentaire de même type fournie par le moyen de recherche d'informations complémentaires.

3. Dispositif selon l'une quelconque des revendications 1 ou 2, **caractérisé en ce qu'**il comporte un moyen de traitement d'images (130) adapté à vérifier que chaque document dont une image est captée par le moyen de capture d'images comporte toute l'information requise pour ladite procédure et, en cas de manque d'information requise, à transmettre au moyen de demande d'information (140), chacune des informations manquantes sur ledit document.

4. Dispositif selon l'une quelconque des revendications 1 à 3, **caractérisé en ce qu'**il comporte un capteur (160, 460) d'une image d'une partie du corps de l'utilisateur et un moyen d'analyse biométrique (165) adapté à comparer ladite image et une image d'une photographie de l'utilisateur présente sur un document dont une image est captée par un moyen de capture d'image (125, 425).

5. Dispositif selon l'une quelconque des revendications 1 à 4, **caractérisé en ce qu'**il comporte un moyen de capture (170) d'écriture de l'utilisateur faite à la surface dudit moyen de capture d'écriture, et un moyen d'analyse d'écriture (175) adapté à comparer ladite écriture avec une image d'une écriture de l'utilisateur présente sur un document dont une image est captée par le moyen de capture d'image (125, 425).

6. Dispositif selon l'une quelconque des revendications 1 à 5, **caractérisé en ce qu'**il comporte un moyen de transmission à distance (200, 500) d'images de documents à un terminal tiers et un moyen d'orientation de l'utilisateur vers ledit terminal tiers.

7. Dispositif selon l'une quelconque des revendications 1 à 6, **caractérisé en ce qu'**il comporte un moyen d'évaluation de risque (210) relatif à l'authenticité d'un document et un moyen de signalisation (200) adapté à signaler au moins un cas d'évaluation de risque supérieure à une valeur prédéterminée.

8. Dispositif selon l'une quelconque des revendications 1 à 7, **caractérisé en ce qu'**il comporte un moyen d'évaluation de risque (205) relatif à l'identification de l'utilisateur et un moyen de signalisation (200) adapté à signaler au moins un cas d'évaluation de risque supérieure à une valeur prédéterminée.

9. Dispositif selon l'une quelconque des revendications 1 à 8, **caractérisé en ce qu'**il comporte un moyen d'analyse (165) du comportement physique de l'utilisateur.

10. Procédé de traitement d'une pluralité de procédures basées sur une pluralité de types de documents, **caractérisé en ce qu'**il comporte :
une étape (310 à 317) de sélection d'une procédure parmi ladite pluralité de procédure, comportant
une étape (310) de capture d'images de documents,
une étape (315) de traitement d'images captées par le moyen de capture d'images, adapté à extraire des informations d'au moins une image de document captée par le moyen de capture d'images (125, 425), et à reconnaître un type de document dans ladite pluralité de types de documents, et
une étape (317) d'identification de procédure pour identifier une procédure à laquelle correspond ledit type de document ;
une étape (319) d'identification, dans une base de données, d'informations complémentaires nécessaires pour la réalisation de ladite procédure, au cours de laquelle on identifie au moins un document complémentaire audit document ;
une étape de demande d'information complémentaire à l'utilisateur adapté, d'une part, à demander, à l'utilisateur au moins un document complémentaire identifié au cours de l'étape d'identification d'information complémentaire et, d'autre part, à déclencher une étape de capture d'images pour capter une image de chaque document complémentaire demandé,
une étape (315) de traitement d'image de document complémentaire, on vérifie le type de chaque document complémentaire dont une image est captée, et
une étape de comparaison d'informations de même type extraites d'images de différents documents et de vérification de leur correspondance, au cours de laquelle on signale une absence de correspondance entre les informations de même type extraites d'images de différents documents.

## Patentansprüche

1. Vorrichtung (100, 400) zum Bearbeiten einer Vielzahl von Verfahren basierend auf einer Vielzahl von Dokumenttypen, **dadurch gekennzeichnet, dass** sie folgendes umfasst:
ein Mittel (125, 130, 215, 220, 425, 515) zur Auswahl eines Verfahrens aus der besagten Vielzahl von Verfahren, folgendes umfassend:
ein Mittel zum Erfassen von Dokumentenbildern (125, 425),
ein Mittel zum Bearbeiten von Bildern (130), die vom Mittel zum Erfassen von Bildern erfasst wurden, das sich dazu eignet, Informationen aus zumindest einem Dokumentenbild zu ziehen, das durch das Mittel zum Erfassen von Dokumentenbildern (125, 425) erfasst wurde, und einen Dokumententyp aus der besagten Vielzahl von Dokumenttypen zu erkennen,
ein Mittel zum Identifizieren eines Verfahrens, das sich dazu eignet, ein Verfahren zu identifizieren, dem der besagte Dokumenttyp entspricht;
ein Mittel zum Identifizieren ergänzender Informationen aus einer Datenbank (122, 145), die zur Durchführung des besagten Verfahrens nötig sind, das sich dazu eignet, zumindest ein ergänzendes Dokument zu identifizieren;
ein Mittel zum Anfordern einer ergänzenden Information (140, 440) beim Benutzer, das sich einerseits dazu eignet, beim Benutzer zumindest ein ergänzendes Dokument anzufordern, das durch das Mittel zum Identifizieren ergänzender Informationen identifiziert wird, und andererseits um ein Mittel zum Erfassen von Bildern (125, 425) zu steuern, um es ein Bild eines jeden angeforderten ergänzenden Dokuments erfassen zu lassen, wobei sich das Mittel zum Bearbeiten von Bildern dazu eignet, den Typen eines jeden ergänzenden Dokuments zu überprüfen, von dem ein Bild erfasst wurde; und
ein Mittel (155) zum Vergleichen von Informationen desselben Typs, die aus Bildern verschiedener Dokumente gezogen werden, das deren Entsprechung überprüft, wobei sich das Mittel zum Anfordern ergänzender Informationen (140, 440) dazu eignet, eine fehlende Entsprechung zwischen den Informationen desselben Typs zu melden, die aus Bildern verschiedener Dokumente gezogen wurden.

2. Vorrichtung nach Anspruch 1, die darüber hinaus folgendes umfasst:
- ein Mittel zum Suchen nach ergänzenden Informationen in einer Datenbank (122), das sich dazu eignet, in einer Datenbank nach zumindest einer ergänzenden Information zu suchen, die durch das Mittel zum Identifizieren ergänzender Informationen identifiziert worden ist, und
- ein Mittel zum Vergleichen zumindest einer ergänzenden Information, die durch einen Benutzer als Antwort auf die Anforderung ergänzender Informationen beigestellt wird, die durch das Mittel zum Anfordern ergänzender Informationen durchgeführt wurde, mit zumindest einer ergänzenden Information desselben Typs, die vom Mittel zum Suchen nach ergänzenden Informationen beigestellt wird, wobei sich das Mittel zum Anfordern (235, 535) einer Information dazu eignet, eine fehlende Entsprechung zwischen zumindest einer ergänzenden Information, die durch einen Benutzer beigestellt wird, und einer ergänzenden Information desselben Typs zu melden, die durch das Mittel zum Suchen nach ergänzenden Informationen beigestellt wird.

3. Vorrichtung nach einem der Ansprüche 1 oder 2, **dadurch gekennzeichnet, dass** sie ein Mittel zum Bearbeiten von Bildern (130) umfasst, das sich dazu eignet, zu überprüfen, dass jedes Dokument, von dem durch das Mittel zum Erfassen von Bildern ein Bild erfasst wurde, jede Information umfasst, die für das besagte Verfahren benötigt wird, und beim Fehlen einer erforderlichen Information dem Mittel zum Anfordern einer Information (140) jede der fehlenden Informationen über das besagte Dokument zu übermitteln.

4. Vorrichtung nach irgendeinem der Ansprüche 1 bis 3, **dadurch gekennzeichnet, dass** sie einen Sensor (160, 460) für das Bild eines Teils des Körpers des Benutzers und ein Mittel zur biometrischen Analyse (165) umfasst, das sich dazu eignet, das besagte Bild mit einem Bild einer Fotografie des Benutzers zu vergleichen, die auf einem Dokument vorhanden ist, von dem durch ein Mittel zum Erfassen von Bildern (125, 425) ein Bild erfasst worden ist.

5. Vorrichtung nach irgendeinem der Ansprüche 1 bis 4, **dadurch gekennzeichnet, dass** sie ein Mittel zum Erfassen (170) der Schrift des Benutzers umfasst, die auf der Oberfläche des besagten Schrifterfassungsmittels erfolgt ist, und ein Schriftanalysemittel (175), das sich dazu eignet, die besagte Schrift mit einem Bild einer Schrift des Benutzers zu vergleichen, die auf einem Dokument vorhanden ist, von dem durch ein Mittel zum erfassen von Bildern (125, 425) ein Bild erfasst worden ist.

6. Vorrichtung nach irgendeinem der Ansprüche 1 bis 5, **dadurch gekennzeichnet, dass** sie ein Mittel zur Fernübertragung (200, 500) von Dokumentenbildern zu einem Dritt-Terminal und ein Mittel zur Orientierung des Benutzers zum besagten Dritt-Terminal umfasst.

7. Vorrichtung nach irgendeinem der Ansprüche 1 bis 6, **dadurch gekennzeichnet, dass** sie ein Mittel zur Risikobewertung (210) in Bezug auf die Authentizität eines Dokuments und ein Meldemittel (200) umfasst, das sich dazu eignet, zumindest einen Fall einer Risikobewertung über einem vorbestimmten Wert zu melden.

8. Vorrichtung nach irgendeinem der Ansprüche 1 bis 7, **dadurch gekennzeichnet, dass** sie ein Mittel zur Risikobewertung (205) in Bezug auf die Identifizierung eines Benutzers und ein Meldemittel (200) umfasst, das sich dazu eignet, zumindest einen Fall einer Risikobewertung über einem vorbestimmten Wert zu melden.

9. Vorrichtung nach irgendeinem der Ansprüche 1 bis 8, **dadurch gekennzeichnet, dass** sie ein Mittel zur Analyse (165) des körperlichen Verhaltens des Benutzers umfasst.

10. Verfahren zum Bearbeiten einer Vielzahl von Verfahren basierend auf einer Vielzahl von Dokumenttypen, **dadurch gekennzeichnet, dass** es folgendes umfasst:
einen Schritt (310 bis 317) zum Auswählen eines Verfahrens aus der besagten Vielzahl von Verfahren, folgendes umfassend
einen Schritt (310) zum Erfassen von Dokumentenbildern,
einen Schritt (315) zum Bearbeiten von Bildern, die vom Mittel zum Erfassen von Bildern erfasst werden, das sich dazu eignet, aus zumindest einem Dokumentenbild zu ziehen, das durch das Mittel zum Erfassen von Dokumentenbildern (125, 425) erfasst wurde, und einen Dokumententyp aus der besagten Vielzahl von Dokumententypen zu erkennen, und
einen Schritt (317) zum Identifizieren eines Verfahrens, um ein Verfahren zu identifizieren, dem der besagte Dokumententyp entspricht;
einen Schritt (319) zum Identifizieren ergänzender Informationen aus einer Datenbank, die zur Durchführung des besagten Verfahrens nötig sind, im Laufe dessen man zumindest ein zum besagten Dokument ergänzendes Dokument identifiziert;
einen Schritt zum Anfordern einer ergänzenden Information beim Benutzer, das sich einerseits dazu eignet, beim Benutzer zumindest ein ergänzendes Dokument anzufordern, das im Laufe des Schrittes der Identifizierung einer ergänzenden Information identifiziert wurde, und andererseits um einen Schritt zum Erfassen von Bildern auszulösen, um ein Bild eines jeden angeforderten ergänzenden Dokuments zu erfassen,
einen Schritt (315) zum Bearbeiten eines ergänzenden Dokumentenbildes, wobei man den Typen eines jeden ergänzenden Dokuments überprüft, von dem ein Bild erfasst wurde, und
einen Schritt zum Vergleichen von Informationen desselben Typs, die aus den Bildern von verschiedenen Dokumenten gezogen wurden, und zum Überprüfen ihrer Entsprechung, im Laufe dessen man eine fehlende Entsprechung zwischen den Informationen desselben Typs meldet, die aus den Bildern von verschiedenen Dokumenten gezogen wurden.

## Claims

1. Device (100, 400) for processing a plurality of procedures based on a plurality of types of documents, **characterized in that** it includes:
a means (125, 130, 215, 220, 425, 515) of selecting one procedure from among said plurality of procedures, including:
a means of capturing images (125, 425) of documents,
a means of processing images (130) captured by the means of capturing images, adapted to extract information from at least one document image captured by the means of capturing images (125, 425) and to recognize one type of document from among said plurality of types of documents, and
a means of identifying a procedure adapted to identify the procedure to which said type of document corresponds,
a means of identifying, in a database (122, 145), complementary information needed to perform said procedure, adapted to identify at least one complementary documents,
a means of requesting complementary information (140, 440) from the user, adapted, on the one hand, to request at least one complementary document and, on the other hand, to command a means of capturing images (125, 425) to make it capture an image of each complementary document requested, the means of processing images being adapted to verify the type of each complementary document of which an image has been captured and
a means (155) of comparing information of the same type extracted from images of different documents in order to verify that they correspond, the means of requesting complementary information (140, 440) being adapted to indicate any lack of correspondence between information of the same type extracted from images of different documents.

2. Device according to claim 1, that further includes:
a means of searching for complementary information, in a database (122), adapted to search, in a database, for at least one piece of complementary information identified by the means of identifying complementary information and
a means of comparing at least one piece of complementary information provided by a user in response to the request for complementary information made by the means of requesting complementary information with at least one piece of complementary information of the same type provided by the means of searching for complementary information, the means of requesting (235, 535) information being adapted to indicate any lack of correspondence between at least one piece of complementary information provided by the user and one piece of complementary information of the same type provided by the means of searching complementary information.

3. Device according to either one of claims 1 or 2, **characterized in that** it includes a means of processing images (130) adapted to verify that each document of which an image has been captured by the means of capturing images includes all the information requested for said procedure and, in the case of a lack of requested information, to transmit to the means of requesting information (140), each of the pieces of information missing from said document.

4. Device according to any one of claims 1 to 3, **characterized in that** it includes a device for capturing (160, 460) an image of a part of the user's body and a means of biometric analysis (165) adapted to compare said image with an image of a photograph of the user on a document of which an image has been captured by a means of capturing images (125, 425).

5. Device according to any one of claims 1 to 4, **characterized in that** it includes a means of capturing (170) the user's handwriting written on the surface of said means of capturing handwriting, and a means of analyzing handwriting (175) adapted to compare said handwriting with an image of the user's handwriting on a document of which an image has been captured by the means of capturing images (125, 425).

6. Device according to any one of claims 1 to 5, **characterized in that** it includes a means of remote transmission (200, 500) of document images to a third-party terminal and a means of orienting the user to said third-party terminal.

7. Device according to any one of claims 1 to 6, **characterized in that** it includes a means of risk assessment (210) concerning the authenticity of a document and a means of alerting (200) adapted to indicate at least one case of a risk assessment greater than a predetermined value.

8. Device according with any one of claims 1 to 7, **characterized in that** it includes a means of risk assessment (205) concerning the identification of the user and a means of alerting (200) adapted to indicate at least one case of a risk assessment greater than a predetermined value.

9. Device according to any one of claims 1 to 8, **characterized in that** it includes a means of analysis (165) of the user's physical behavior.

10. Process for processing a plurality of procedures based on a plurality of types of documents, **characterized in that** it includes:
a step (310 to 317) of selecting one procedure from among said plurality of procedures, including:
a step (310) of capturing images of documents,
a step (315) of processing images captured by the means of capturing images, to extract information from at least one document image captured by the means of capturing images and to recognize one type of document from among said plurality of types of documents, and
a step (317) of identifying a procedure to identify the procedure to which said type of document corresponds,
a step (319) of identifying, in a database, complementary information needed to perform said procedure, wherein at least one complementary documents is identified, a step of requesting complementary information from the user, adapted, on the one hand, to request at least one complementary document and, on the other hand, to command a means of capturing images to make it capture an image of each complementary document requested, the means of processing images being adapted to verify the type of each complementary document of which an image has been captured and
a step (315) of comparing information of the same type extracted from images of different documents in order to verify that they correspond, wherein any lack of correspondence between information of the same type extracted from images of different documents is indicated.
